# NEUE EUROPÄISCHE PATENTSCHRIFT

(11) **EP 2 776 174 B2**
(45) Veröffentlichungstag und Bekanntmachung des Hinweises auf die Entscheidung über den Einspruch: **17.04.2024**
(45) Hinweis auf die Patenterteilung: 10.04.2019
(21) Anmeldenummer: 12786830.5
(22) Anmeldetag: 02.11.2012
(51) Int. Cl.: B05C 5/02, F16K 31/06

(54) **VENTIL, INSBESONDERE LEIMVENTIL**
VALVE, IN PARTICULAR GLUE VALVE
SOUPAPE, EN PARTICULIER SOUPAPE À COLLE

(30) Priorität: 08.11.2011 DE 102011117836
(43) Veröffentlichungstag der Anmeldung: 17.09.2014
(73) Patentinhaber: Focke & Co. (GmbH & Co. KG), 27283 Verden (DE)
(72) Erfinder: NEUHAUS, Nils, 21614 Buxtehude (DE); STEGEN, Marc-Daniel, 22145 Hamburg (DE); HOPPE, Reinhard, 21395 Tespe (DE)
(74) Vertreter: Aulich, Martin
(86) Internationale Anmeldenummer: PCT/EP2012/004567
(87) Internationale Veröffentlichungsnummer: WO 2013/068084

(56) Entgegenhaltungen:
- EP-A2- 1 128 400
- WO-A1-2010/136096
- FR-A1- 2 341 136
- JP-A- H06 122 206
- JP-A- S62 221 463
- JP-A- 2001 046 940
- JP-A- 2005 238 177
- US-A- 5 673 820
- US-A1- 2001 023 876
- US-A1- 2003 161 939
- US-A1- 2003 205 588
- US-A1- 2004 081 759
- US-A1- 2004 195 278
- US-A1- 2011 118 098

## Beschreibung

Die Erfindung betrifft ein Verfahren zur Steuerung eines Ventils für fließfähige Medien, insbesondere ein Leimventil (Leimdüse) mit den Merkmalen des Oberbegriffs des Anspruchs 1.

Ein Leimventil ist in WO 2010/136096 A1 dargestellt und beschrieben. Ein Verschlussorgan, nämlich Ventilstößel, ist von einer (elektrischen) Spule mit Spulenkern umgeben, Die Einheit aus Spule und Spulenkern ist in einem Ventilgehäuse mit seitlich angesetzter Steckereinheit untergebracht. Des Weiteren sind ein Leimanschluss mit Leimkanal und ein Stecker für die Stromzuführung am Ventilgehäuse bzw. an der Steckereinheit angeordnet. Der Spulenkern besteht (bei der praktischen Umsetzung) aus hochwertigem Kunststoff mit Faserverstärkung.

Die US 2004/081759 A1 beschäftigt sich mit der Herstellung von Bildschirmen. Im Rahmen dieser Herstellung werden Fluid-Ausgabegeräte eingesetzt. Es wird erkannt, dass die Ausgabemenge der Ausgabegeräte von der Viskosität des Fluids abhängt, die sich im Betrieb ändern kann. Um diese auszugleichen, werden Pulsweiten zur Steuerung der Ausgabegeräte angepasst.

Die US 2001/023876 A1 offenbart ein Fluid-Abgabesystem, bei dem die Temperatur des Fluids möglichst konstant gehalten wird, um die Viskosität des Fluids möglichst ebenfalls konstant zu halten.

Die US 5,673,820 A zeigt ein Fluid-Abgabesystem, bei dem durch Anpassung von Ausgabezeiten ebenfalls Viskositätseinflüsse minimiert werden sollen.

Die vorliegende Erfindung befasst sich mit konstruktiven und funktionalen Verbesserungen derartiger (oder ähnlicher) Ventile.

Diese Aufgabe wird gelöst durch ein Verfahren mit den Merkmalen des Anspruchs 1 zur Steuerung der Arbeitsweise des Ventils. Es geht darum, veränderte physikalische Parameter, die sich auf die Viskosität des Mediums (Leim) auswirken, zu berücksichtigen. Dies geschieht erfindungsgemäß über die Steuerung der Öffnungsdauer des Ventils, mit dem Ergebnis, dass bei unterschiedlicher Viskosität aufgrund unterschiedlicher Öffnungszeit des Ventils im Wesentlichen gleich große Leimportionen abgegeben bzw. Leimpunkte oder -streifen erzeugt werden. Insbesondere wird die Öffnungsdauer nach Maßgabe einer vorangehenden Stillstandsphase des Ventils - und damit verbundener Abkühlung - ermittelt und beim Wiederanfahren der Einrichtung durch längere Öffnungsdauer des Ventils berücksichtigt.

Weitere Merkmale und Einzelheiten der Innovation werden nachfolgend anhand der Zeichnungen näher erläutert. Es zeigt:

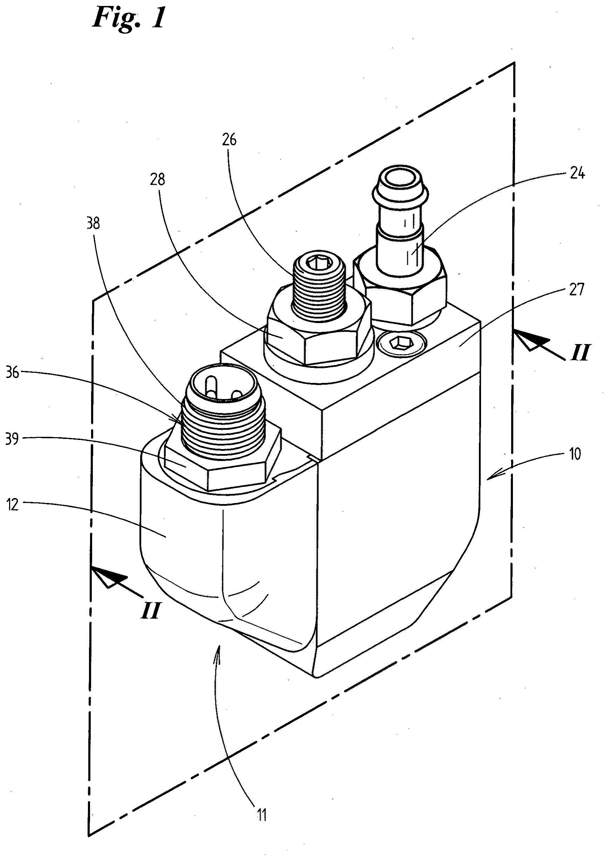

- Fig. 1: ein (Leim-)Ventil in perspektivischer Außenansicht,
- Fig. 2: das Ventil gemäß Fig. 1 in einem Vertikalschnitt entsprechend Schnittebene II-II in Fig. 1,
- Fig. 3: einen Horizontalschnitt des Leimventils gemäß Fig. 2 in der Schnittebene III-III,

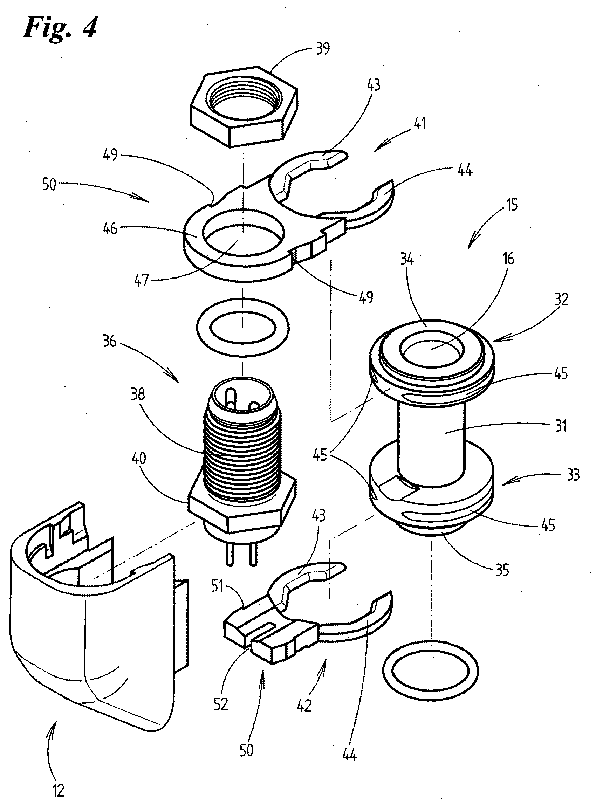

- Fig. 4: eine Explosionszeichnung mit Einzelteilen des Ventils, perspektivisch,
- Fig. 5: ein Diagramm betreffend die Steuerung von (Leim-)Ventilen.

Das in den Zeichnungen dargestellte Ventil ist für den wichtigsten Einsatzbereich bestimmt, nämlich als Leimventil. Es geht um die Übertragung verhältnismäßig kleiner Leimportionen auf Verpackungsmaterial, insbesondere auf Faltlappen von (Zigaretten-)Packungen. Das Leimventil ist für hohe Taktzahlen bestimmt.

Das in den Zeichnungen als Ausführungsbeispiel dargestellte Ventil bzw. Leimventil entspricht im grundsätzlichen Aufbau dem Leimventil gemäß WO 2010/136096. Ein Grundkörper besteht demnach aus einem Ventilgehäuse 10, vorzugsweise aus Metall und einer als Ergänzung angesetzten Steckereinheit 11 mit einem das Ventilgehäuse 10 ergänzenden Steckergehäuse 12, vorzugsweise aus Kunststoff.

Innerhalb des Ventilgehäuses 10 ist ein runder bzw. (teil-)zylinderischer Innenraum 13 gebildet, der Funktionsteile des Ventils aufnimmt. Insbesondere sind Organe für die elektromagnetische Betätigung des Ventils im Innenraum 13 angeordnet. Es handelt sich dabei um eine (elektrische) Spule 14, die auf einem Spulenkern 15 angeordnet ist. Letzterer bildet eine durchgehende Mittenöffnung bzw. eine Kernöffnung 16, die vorzugsweise zylindrisch und glattwandig ausgebildet ist.

Innerhalb der Kernöffnung 16 ist ein Verschlussorgan des Ventils verschiebbar gelagert, vorliegend ein Ventilstößel 17. Dieser ist mit einem im Bereich der Kernöffnung 16 gelagerten Führungsstück 18 versehen, welches in der Außenkontur zylindrisch oder - wie gezeigt - polygonal ausgebildet ist. Das Führungsstück 18 ist für die Bewegungen des Ventilstößels 17 in Längsrichtung innerhalb der Kernöffnung 16 verschiebbar, insbesondere auf- und abbewegbar.

Außerhalb des Bereichs der Kernöffnung 16 ist der Ventilstößel 17 mit einem Schaft bzw. einer Düsennadel 19 geringeren Durchmessers versehen. An deren unterem Ende ist das eigentliche Verschlussorgan angebracht, vorliegend eine Kugel 20, die mit einer Ventilöffnung 21 (Düsenöffnung) am unteren Ende des Ventilgehäuses 10 zusammenwirkt. Die Ventilöffnung 21 ist im Bereich eines trichterförmigen bzw. konischen Ventilsitzes 22 angeordnet. Das Ventilgehäuse 10 bildet hier eine Ventilkammer 23, der das Medium - Leim - über einen Leimkanal 24 zugeführt wird. In Schließstellung liegt die Kugel 20 dichtend am Ventilsitz 22 an.

Gegenüberliegend zur Ventilkammer 23 bzw. zur Ventilöffnung 21 ist ein Verschlussmittel für die Kernöffnung 16 vorgesehen. Es handelt sich dabei um einen Verschlusskopf, der zugleich als Magnethalter 25 wirkt. Dieser ist als zylindrischer bzw. bolzenartiger Körper ausgebildet, der passend innerhalb der Kernöffnung 16 des Spulenkerns 15 angeordnet ist. Der Verschlusskopf bzw. Magnethalter 25 ist durch einen Gewindebolzen 26 in einem ebenfalls mittels Gewinde am Ventilgehäuse 10, nämlich an einem (oberen) Deckel 27, angebrachten Träger 28 gehalten. Die Relativstellung des Magnethalters 25 ist so einstellbar.

Innerhalb der Kernöffnung 16 ist der Magnethalter 25 als Öffnungsabschluss abgedichtet, nämlich mit einem O-Ring 29. Dieser grenzt den Magnethalter 25 von einem innerhalb der Kernöffnung 16 angeordneten Dauermagneten 30 ab, der vorliegend eine zylindrische Kontur aufweist und mit der (nach unten gerichteten) freien Fläche als Anschlag für den Ventilstößel 17 in der Öffnungsstellung dient.

Eine Besonderheit ist die Ausbildung des Spulenkerns 15. Dieser besteht aus einem vorzugsweise zylindrischen, dünnwandigen Tragstück 31, auf dem die Wicklungen der Spule 14 lagern. An den Enden oder an Endbereichen des Tragstücks 31 sind quergerichtete Begrenzungen für die Spule 14 angeordnet. Diese sind vorliegend als Begrenzungsscheiben 32, 33 ausgebildet. Die kreisförmigen Scheiben 32, 33 bilden vorzugsweise mit dem Tragstück 31 eine (einstückige) Einheit. Beide Begrenzungsscheiben 32, 33 sind an der freien Seite mit einem (ringförmigen) Bund 34, 35 versehen, der jeweils zentrierend in einer durch das Ventilgehäuse 10 gebildeten, passenden Führung angeordnet ist.

Der Spulenkern 15 besteht mindestens teilweise, vorzugsweise aber insgesamt aus keramischem Werkstoff, insbesondere aus oxidkeramischem Werkstoff. Besonders vorteilhaft ist Zirkoniumoxid als Material für den Spulenkern 15, mindestens für das Tragstück 31. Ein besonderer (überraschender) Vorteil besteht darin, dass die innere, zylindrische Mantelfläche des Spulenkerns 15 bzw. der Kernöffnung 16 durch entsprechende mechanische Bearbeitung sehr glattflächig ausgebildet werden kann, so dass der Ventilstößel 17 bzw. dessen Führungsstück 18 nahezu verschleißfrei innerhalb des Spulenkerns 15 bewegbar ist. Eine weitere Besonderheit ist die Verbindung der Steckereinheit 11 mit dem Ventilgehäuse 10 mittels kraft- und/oder formschlüssiger Verbindungsorgane, die bei der Montage des Ventils nach Art einer Schnappverbindung in der Position am Ventilgehäuse 10 fixiert wird. Die Steckereinheit 11 ist entsprechend WO 2010/136096 aufgebaut, nämlich mit einem elektrischen Anschluss mit einem außen freiliegenden Stecker 36. An diesen schließen innerhalb des Steckergehäuses 12 (elektrische) Leitungen 37 an, die zu der Spule 14 führen. Der Stecker 36 weist ein Anschlussstück 38 mit Außengewinde auf. Eine Feststellschraube 39 an der Außenseite des Steckergehäuses 12 und eine entsprechende Feststellschraube 40 innerhalb des Gehäuses fixieren den Stecker 36 unter Abdichtung.

Zur Herstellung der (mechanischen) Verbindung zwischen Ventilgehäuse 10 und Steckereinheit 11 dienen als gesonderte Werkstücke ausgebildete Verbindungsorgane, vorliegend in der Ausführung als Verbindungsklemmen 41, 42. Eine erste Verbindungsklemme 41 ist in einem Bereich oberhalb des Dauermagneten 30 angeordnet und wirkt aufgrund der Gestaltung als oberer Abschluss des Steckergehäuses 12. Eine weitere (untere) Verbindungsklemme 42 ist im Bereich der dem Ventilsitz 22 zugeordneten Begrenzungsscheibe 33 positioniert. Beide Verbindungsklemmen 41, 42 wirken mit dem Spulenkern 15 zusammen, sind nämlich form- und kraftschlüssig mit den Begrenzungsscheiben 32 bzw. 33 verbunden.

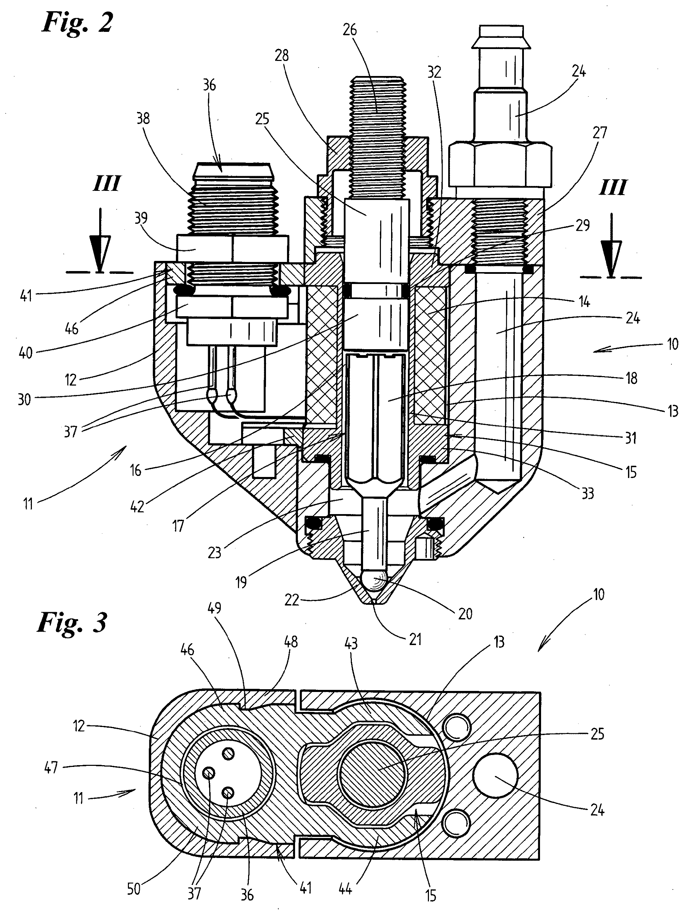

Die Verbindungsklemmen 41, 42 sind zu diesem Zweck mit Klemmstücken versehen, vorliegend mit zwei Klemmfingern 43, 44, die in der Verbindungstellung den Spulenkern 15 bzw. die Scheibe 32 oder 33 umfassen. Die Außenkontur der Klemmfinger 43, 44 ist kreisbogenförmig und so bemessen, dass sie vorzugsweise mit der Begrenzungsscheibe 32, 33 bündig abschließt. Diese ist am Außenumfang mit Vorsprüngen und/oder Vertiefungen versehen, die einen formschlüssigen Eingriff der Klemmfinger 43, 44 gewährleisten. Vorliegend sind die Begrenzungsscheiben 32, 33 längs des Umfangs mit Nuten 45 versehen, die je einem Klemmfinger 43, 44 zugeordnet sind. Die Nuten 45 sind so angeordnet und bemessen, dass die Klemmfinger 43, 44 in der Haltestellung vorzugsweise außen bündig mit der Begrenzungsscheibe 32, 33 abschließen. Die Klemmfinger 43, 44 sind innenseitig vorliegend mit einer polygonalen Kontur ausgebildet, entsprechend auch die Nuten 45 (Fig. 3). Die Klemmfinger 43, 44 umfassen einen Teil der Begrenzungsscheiben 32, 33, so dass eine formschlüssige Verbindung entsteht (ClipsVerbindung), die aufgrund der aufeinander abgestimmten Abmessungen zusätzlich kraftschlüssig wirken kann, so dass die Klemmfinger 43, 44 unter Spannung an den Begrenzungsscheiben 32, 33 anliegen.

Die Verbindungsklemmen 41, 42 bestehen aus einem elastisch verformbaren Werkstoff, insbesondere aus einem belastbaren Kunststoff. Die Klemmfinger 43, 44 sind beim Zusammenfügen mit dem Spulenkern 15 elastisch verformbar, nämlich auseinander bewegbar und gelangt in einem Schnappvorgang in die Verankerungsstellung.

Ein Verankerungsstück 46 der Verbindungsklemme 41, 42 ist an bzw. in der Steckereinheit 11 verankert, und zwar vorzugsweise ebenfalls formschlüssig. Die (obere) dem Stecker 36 zugeordnete Verbindungsklemme 41 ist mit einer Öffnung 47 versehen, die auf das Anschlussstück 38 abgestimmt ist und dieses in einem Bereich zwischen den Feststellschrauben 39, 40 umgibt. Die Außenkontur des Verankerungsstücks 46 ist so ausgebildet, dass Vorsprünge und Vertiefungen des Steckergehäuses 12 und des Verankerungsstücks 46 miteinander korrespondieren. Bei dem vorliegenden Ausführungsbeispiel tritt ein Vorsprung 48 an der Innenseite des Steckergehäuses 12 passend in eine entsprechende Vertiefung 49 des Verankerungsstücks 46 ein. Es entsteht eine sägezahnartige Verbindung, und zwar zu beiden Seiten des Steckers 36.

Die dem Ventilsitz 22 zugekehrte Verbindungsklemme 42 weist ein in anderer Weise ausgebildetes Verankerungsstück 50 auf, ebenfalls mit einer seitlichen Kontur, die formschlüssig mit einer entsprechenden Kontur innerhalb des Steckergehäuses 12 korrespondiert. Das Verankerungsstück 50 ist seitlich mit einer Vertiefung 51 versehen, in die ein entsprechender Vorsprung des Gehäuses eintritt. Damit eine kraftschlüssige Verbindung möglich ist bzw. eine Schnappverbindung, ist das Verankerungsstück 50 seitlich zusammendrückbar, und zwar aufgrund eines am freien Ende offenen Schlitzes 52. Das Verankerungsstück 50 ist demnach gabelartig ausgebildet.

Die Verbindung zwischen Ventilgehäuse 10 und Steckereinheit 11 wird vorzugsweise so geschaffen, dass die Verbindungsklemmen 41, 42 in das in einem separaten Arbeitsgang zusammengesetzte Steckereinheit 11 in der gezeigten Weise eingesetzt werden, so dass die Verbindungsklemmen 41, 42 mit ihrem Klemmteil - Klemmfinger 43, 44 - aus dem Steckergehäuse 12 herausragen. Dieses wird seitlich eingeschoben, derart, dass die Klemmfinger 43, 44 nach Art einer Schnappverbindung die Begrenzungsscheiben 43, 44 umfassen. Die vorliegende Verbindung zwischen Ventilgehäuse 10 und Steckereinheit 11 ist nicht von einer bestimmten Materialauswahl für den Spulenkern 15 abhängig.

Eine weitere Besonderheit ist die Steuerung eines Leimventils dieser oder anderer Ausführung. Es geht darum, die Veränderung der Viskosität des Mediums und/oder des Eigengewichts zu berücksichtigen. Insbesondere bei unterschiedlichen Arbeitstakten und insbesondere bei zeitweiligem Stillstand der Einrichtung, einschließlich der Ventile verändert sich die Viskosität und gegebenenfalls das Eigengewicht des Mediums. Das Ziel ist es, beim Wiederanfahren der Einheit trotz der veränderten Viskosität gleiche bzw. gleich große Leimportionen zu erzeugen bzw. auf einen Träger zu übertragen.

Zu diesem Zweck wird so vorgegangen, dass das (Leim-)Ventil während einer ersten Phase nach dem Wiederanfahren eine längere (nach und nach abnehmende) Öffnungszeit aufweist, nämlich so, dass die abgegebene Leimmenge die-erwünschte Größe hat. Anhand von Beobachtungen bzw. empirischen Feststellungen wird die Veränderung der Viskosität und damit die Veränderung der Größe der (Leim-)Portion während des kontinuierlichen, "normalen" Betriebs einerseits und die Veränderung der Viskosität und damit die Veränderung der Portionsgröße in Abhängigkeit von der Dauer des Stillstands (und damit verbundener Abkühlung des Ventils) ermittelt. Entsprechende Kurven sind in der Steuerung der Ventile - für jedes Ventil gesondert - hinterlegt. Beim Wiederanfahren wird in Abhängigkeit von der Stillstandsdauer während einer Betriebsphase mit größerer Öffnungsdauer des Ventils gefahren.

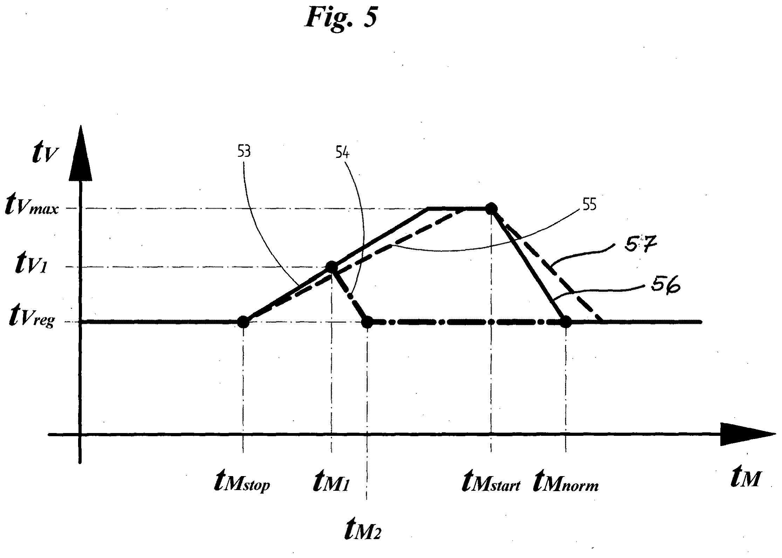

In Fig. 5 ist ein Diagramm gezeigt, welches schematisch den in der Steuerung des Leimventils gespeicherten Algorithmus als Beispiel zeigt. Auf der Abszisse ist die (Betriebs-)Zeit t_{M} der Einrichtung und damit des betreffenden Ventils dargestellt. Die Ordinate zeigt die Öffnungszeiten t_{V} des Ventils.

Mit der Linie t_{Vreg} wird die Öffnungszeit eines Ventils bei standardmäßigem Betrieb wiedergegeben. Eine (linear ansteigende) Linie 53 betrifft veränderte Öffnungszeiten eines Ventils beim Wiederanfahren nach einem Maschinenstopp (t_{Mstop}) in Abhängigkeit von der Stillstandsdauer. Bei dem konkreten Beispiel wird beim Wiederanfahren des Ventils zum Zeitpunkt t_{M1} eine Öffnungsdauer von t_{V1} geregelt.

Dieses Beispiel geht von einer (vorangegangenen) Betriebsunterbrechung aus (t_{V1}), die kürzer ist als die maximal verwertbare Stillstandsdauer t_{Vmax}. Nach Wiederanfahren wird die Öffnungsdauer des Ventils entsprechend der strichpunktierten, schräggerichteten Linie 54 nach einer (kürzeren) Phase des Betriebs mit längerer Öffnungsdauer auf die standardmäßige Öffnungszeit entsprechend t_{Vreg} zurückgefahren, so dass die standardmäßige Betriebsweise zum Zeitpunkt t_{M2} erreicht ist. Bei längerer Betriebsunterbrechung wird der Zeitpunkt t_{V1} auf der Linie 53 bei entsprechender Position festgelegt. Bei diesem Beispiel ist darüber hinaus vorgesehen, dass bei längerer Betriebsunterbrechung jenseits einer Dauer t_{Vmax} keine weitere Erhöhung der Öffnungsdauer des Ventils geregelt wird.

Die gestrichelte Linie 55 betrifft eine Alternative zu der Linie 53, nämlich für die Steuerung von Ventilen mit geringerem Temperaturverlust beim Stillstand, zum Beispiel bei Mehrfach-Leimventilen. In allen Fällen wird das Ventil nach einer Phase längerer Öffnungsdauer über empirisch ermittelte Phasen auf t_{Vreg} zurückgefahren, wie durch die Rückführungslinien 56, 57, die den Linien 53 bzw. 55 zugeordnet sind, dargestellt. Die Rückführungsphasen der Öffnungsdauer können von Fall zu Fall unterschiedlich sein, wie durch den Neigungswinkel der Linien 56, 57 zum Ausdruck gebracht.

Bei der separaten Vormontage der Steckereinheit 11 wird der Innenraum des Steckergehäuses 12, insbesondere im Bereich der Leitungen 37, mit einer üblichen Füllmasse ausgefüllt. Diese trägt zu einer zusätzlichen Fixierung der Verbindungsklemmen 41, 42 bei. Alternativ kann das Ventil so ausgebildet sein, dass die Verbindungsklemmen - bei entsprechender Ausführung - im oder am Ventilgehäuse 10 angebracht und die Klemmorgane 43, 44 beim Zusammenfügen mit der Steckereinheit 11 clipsartige Verbindungen mit entsprechenden Haltebereichen im Steckergehäuse 12 eingehen.

**Bezugszeichenliste**

| | | | |
|---|---|---|---|
| 10 | Ventilgehäuse | 39 | Feststellschraube |
| 11 | Steckereinheit | 40 | Feststellschraube |
| 12 | Steckergehäuse | 41 | Verbindungsklemme |
| 13 | Innenraum | 42 | Verbindungsklemme |
| 14 | Spule | 43 | Klemmfinger |
| 15 | Spulenkern | 44 | Klemmfinger |
| 16 | Kernöffnung | 45 | Nut |
| 17 | Ventilstößel | 46 | Verankerungsstück |
| 18 | Führungsstück | 47 | Öffnung |
| 19 | Düsennadel | 48 | Vorsprung |
| 20 | Kugel | 49 | Vertiefung |
| 21 | Ventilöffnung | 50 | Verankerungsstück |
| 22 | Ventilsitz | 51 | Vertiefung |
| 23 | Ventilkammer | 52 | Schlitz |
| 24 | Leimkanal | 53 | Linie |
| 25 | Magnethalter | 54 | Linie |
| 26 | Gewindebolzen | 55 | Linie |
| 27 | Deckel | 56 | Rückführungslinie |
| 28 | Träger | 57 | Rückführungslinie |
| 29 | O-Ring | | |
| 30 | Dauermagnet | | |
| 31 | Tragstück | | |
| 32 | Begrenzungsscheibe | | |
| 33 | Begrenzungsscheibe | | |
| 34 | Bund | | |
| 35 | Bund | | |
| 36 | Stecker | | |
| 37 | Leitung | | |
| 38 | Anschlussstück | | |

## Patentansprüche

1. Verfahren zur Betätigung eines Ventils für fließfähige Medien, insbesondere eines Leimventils mit elektromagnetisch betätigbarem Verschlussorgan - Ventilstößel (17) - mit einem in Schließstellung an einem Ventilsitz (22) anliegenden Verschlussstück (20), **dadurch gekennzeichnet, dass** die Dauer der Öffnungsstellung des Ventils - vom Ventilsitz (22) abgehobene Stellung des Ventilstößels (17) bzw. des Verschlussstücks (22) - in Abhängigkeit von der - veränderbaren - Viskosität des Mediums, insbesondere des Leims gesteuert, nämlich verändert wird, derart, dass unabhängig von der Viskosität des Mediums aufgrund unterschiedlicher Öffnungsdauer im Wesentlichen gleich große Portionen des Mediums während der Öffnungsdauer abgegeben werden, und dass die Öffnungsdauer des Ventils nach Maßgabe einer Stillstandsdauer und dadurch bedingter Abkühlung des Ventils und des Mediums gesteuert wird, derart, dass nach einer Stillstandsphase während einer begrenzten Betriebsdauer nach Wiederanfahren eine längere Öffnungsdauer des Ventils als eine standardmäßige Öffnungsdauer eingestellt wird, und dass die Öffnungsdauer bei fortgesetztem Betrieb entlang einer in der Steuerung hinterlegten, empirisch ermittelten Rückführungslinie bis zum Erreichen der standardmäßigen Öffnungsdauer zunehmend verringert wird.

## Claims

1. A method for actuating a valve for free-flowing media, in particular a glue valve with an electromagnetically actuable closure member - valve tappet (17) - having a closure piece (20) which, in the closed position, bears against a valve seat (22), **characterized in that** the period of the opening position of the valve - position of the valve tappet (17) or the closure piece (22) raised from the valve seat (22) - is controlled, namely changed, depending on the - changeable - viscosity of the medium, in particular the glue, in such a manner that, owing to different opening periods, substantially identically sized portions of the medium are dispensed during the opening period irrespective of the viscosity of the medium, and that the opening period of the valve is controlled according to a stoppage period and resultantly induced cooling of the valve and of the medium in such a manner that, following a stoppage phase during a limited operating period after restarting, an opening period of the valve longer than the standard opening period is set, and that the opening period is increasingly reduced along an empirically determined return line stored in the control system as operation continues until the standard opening period is reached.

## Revendications

1. Procédé d'actionnement d'une soupape pour des milieux coulants, en particulier d'une soupape à colle comprenant un organe de fermeture à commande électromagnétique - poussoir de soupape (17) - avec une pièce de fermeture (20) s'appliquant dans la position de fermeture contre un siège de soupape (22), **caractérisé en ce que** la durée de la position d'ouverture de la soupape - position du poussoir de soupape (17) ou de la pièce de fermeture (22) soulevée du siège de soupape (22) - est commandée, à savoir modifiée, en fonction de la viscosité - variable - du fluide, en particulier de la colle, de telle sorte qu'indépendamment de la viscosité du fluide du fait d'une différente durée d'ouverture, des proportions essentiellement identiques du fluide soient distribuées pendant la durée d'ouverture, et **en ce que** la durée d'ouverture de la soupape est commandée en fonction d'une durée d'arrêt, et donc d'un refroidissement associé de la soupape et du fluide, de telle sorte qu'après une phase d'arrêt pendant une durée de fonctionnement limitée après le redémarrage, une durée d'ouverture de la soupape plus longue qu'une durée d'ouverture standard soit réglée, et **en ce qu'**en cas de fonctionnement continu, la durée d'ouverture est diminuée progressivement suivant une courbe de retour établie de manière empirique et mémorisée dans le dispositif de commande jusqu'à ce que la durée d'ouverture standard soit atteinte.
